# EUROPÄISCHE PATENTANMELDUNG

(11) **EP 4 137 533 A1**
(43) Veröffentlichungstag der Anmeldung: **22.02.2023**
(21) Anmeldenummer: 22190396.6
(22) Anmeldetag: 15.08.2022
(51) Int. Cl.: C08J 3/22, C09C 1/58

(54) **VERFAHREN ZUR KONTINUIERLICHEN HERSTELLUNG VON AUSGANGSMATERIALIEN FÜR DIE REIFENHERSTELLUNG**

(30) Priorität: 20.08.2021 DE 102021209200
(71) Anmelder: Continental Reifen Deutschland GmbH, 30165 Hannover (DE)
(72) Erfinder: Burkhart, Alexander, 30165 Hannover (DE); Liu, Fei, 30165 Hannover (DE); Schramm, Oliver, 30165 Hannover (DE)
(74) Vertreter: Continental Corporation

(57) **Zusammenfassung**

Die Erfindung betrifft ein, bevorzugt kontinuierliches, Verfahren zur Herstellung von Ausgangsmaterialien für die Reifenherstellung mit einer Arbeitsvorrichtung umfassend: a1) einen Mahlbereich mit zumindest einer ersten Zugabeöffnung, zumindest einem Mahlwerkzeug zum Mahlen eines Feststoffs und zumindest einem ersten Förderwerkzeug zum Fördern eines Feststoffs durch den Mahlbereich, und a2) einen mit dem Mahlbereich verbundenen Mischbereich mit zumindest einer zweiten Zugabeöffnung, zumindest einem Mischwerkzeug zum Mischen einer Dispersion, zumindest einer Auslassöffnung und zumindest einem zweiten Förderwerkzeug zum Fördern der Dispersion zu der Auslassöffnung, wobei das Verfahren die folgenden Schritte umfasst: v1) Eingeben eines festen Pyrolyseprodukts umfassend Ruß und/oder Siliciumdioxid in den Mahlbereich über die erste Zugabeöffnung, Mahlen des festen Pyrolyseprodukts im Mahlbereich zum Erhalt einer gemahlenen Zusammensetzung, und Fördern der gemahlenen Zusammensetzung aus dem Mahlbereich in den Mischbereich, v2) Eingeben einer Bindeöl-Zusammensetzung in den Mischbereich über die zweite Zugabeöffnung und Mischen der gemahlenen Zusammensetzung mit der Bindeöl-Zusammensetzung zum Erhalt einer ölhaltigen Dispersion, und v3) Ausleiten der ölhaltigen Dispersion aus dem Mischbereich durch die Auslassöffnung.

## Beschreibung

Die Erfindung betrifft ein Verfahren zur Herstellung von Ausgangsmaterialien für die Reifenherstellung mit einer Arbeitsvorrichtung, ein Verfahren zur Herstellung einer Kautschukmischung für die Herstellung von Fahrzeugreifen und ein Verfahren zur Herstellung eines Fahrzeugreifens. Offenbart werden zudem eine Arbeitsvorrichtung, ein Ausgangsmaterial für die Reifenherstellung, eine Kautschukmischung umfassend das Ausgangsmaterial, ein aus dieser Kautschukmischung herstellbares Vulkanisat, einen Fahrzeugreifen umfassend das Vulkanisat und die Verwendung von Pyrolyse-Bindeöl bei der Verarbeitung eines festen Pyrolyseprodukts.

Der Gegenstand der Erfindung ist in den beigefügten Ansprüchen definiert.

Die Herstellung von modernen Fahrzeugreifen ist ein aufwendiges und relativ kostenintensives Verfahren, bei dem regelmäßig erhebliche Mengen an wertvollen Rohstoffen eingesetzt werden müssen. Im Zuge eines gesteigerten Bewusstseins für die Notwendigkeit einer nachhaltigeren Industrieproduktion besteht seit einiger Zeit ein gesteigertes Interesse daran, die Fertigung moderner Fahrzeugreifen nachhaltiger zu gestalten.

Ein wichtiger Bestandteil einer nachhaltigeren Fertigung von Fahrzeugreifen ist das Recycling von alten Fahrzeugreifen, um aus diesen neue Rohstoffe für die Fertigung von neuen Fahrzeugreifen zu gewinnen.

Im Bereich des Reifen-Recyclings kommt dabei der sogenannten Pyrolyse eine wichtige Rolle zu, d. h. der pyrolytischen Zersetzung von Altreifen in einem thermo-chemischen Umwandlungsprozess. Hierbei werden die Altreifen oder andere Kunststoffprodukte unter Ausschluss von Sauerstoff bei hohen Temperaturen behandelt, um die beispielsweise in vulkanisierten Kautschukmischungen enthaltenen organischen Verbindungen, d. h. insbesondere den vernetzten Kautschuk, ohne Auftreten von Verbrennungen aufzuspalten und dadurch neue, kurzkettigere Moleküle zu gewinnen, die zumeist als sogenanntes Pyrolyse-Öl erhalten werden.

Von den für die Herstellung von modernen Fahrzeugreifen benötigten Ausgangsmaterialien kann insbesondere der häufig als Füllstoff eingesetzte Ruß durch die Pyrolyse von Kunststoffprodukten erhalten werden. Bei der Pyrolyse von Kunststoffprodukten, die darüber hinaus anorganische Füllstoffe enthalten, wie dies beispielsweise bei solchen Fahrzeugreifen der Fall ist, die amorphes Siliciumdioxid enthalten, kann auch dieser anorganische Füllstoff im Zuge der Pyrolyse zurückgewonnen werden.

Das Prinzip der Pyrolyse von Kunststoffen, insbesondere von alten Reifen, und die Verwendung bei der Herstellung von Ruß und Pyrolyse-Öl ist dem Fachmann aus dem Stand der Technik bekannt. Entsprechende Offenbarungen finden sich beispielsweise in der US 9938465 B2, CN 107298865 B, CN 110878148 A, CN 111471220 A, CN 112080297 A, US 5894012, US 9453130 B2, US 2020/0123390 A1 und WO 2018/122017 A1.

Die Verarbeitbarkeit des durch Pyrolyse aus alten Kunststoffprodukten herstellbaren Rußes wird angesichts der regelmäßig hohen Anforderungen an die bei der Reifenherstellung eingesetzten Ausgangsmaterialien jedoch in vielen Fällen als unzureichend empfunden. Insbesondere weist der mittels Pyrolyse aus alten Kunststoffprodukten hergestellte Ruß in vielen Fällen eine unzureichende Schüttdichte auf und ist zumeist sehr "fluffig", sodass die Einarbeitung des Materials in typische Kautschukmischungen nur schwer möglich ist.

Aus diesem Grund wurde in den letzten Jahren viel Entwicklungsarbeit darauf gerichtet, die Verarbeitbarkeit des mittels Pyrolyse aus alten Kunststoffprodukten herstellbaren Rußes zu verbessern und diesen in ein hochwertigeres Ausgangsmaterial zu überführen, beispielsweise durch Ausbildung von Pellets. Hierfür wurden Nass- und Trockenverfahren entwickelt, die beispielsweise in der DE 10 2016 015 591 A1 diskutiert werden. Die aus dem Stand der Technik bekannten Verfahren werden jedoch häufig als apparativ sehr aufwendig empfunden, haben einen hohen Platzbedarf und können in vielen Fällen nicht zeit- und kosteneffizient betrieben werden. Darüber hinaus erfordern die aus dem Stand der Technik bekannten Verfahren in vielen Fällen den Einsatz von spezifischen Additiven, welche die spätere Verarbeitbarkeit der Pellets in Kautschukmischungen für die Reifenherstellung nachteilig beeinflussen können.

Ausgehend hiervon schlägt die WO 2008/147711 A1 ein Verfahren vor, bei welchem der Ruß unter Zuhilfenahme eines Bindeöls pelletiert wird. Auch wenn dieses Verfahren nach Einschätzung der Erfinder eine Verbesserung gegenüber den anderen aus dem Stand der Technik bekannten Verfahren darstellt, wird der für das Verfahren benötigte apparative Aufbau zuweilen als sehr aufwendig empfunden werden. Zudem offenbart die WO 2008/147711 A1 ein diskontinuierliches Verfahren, welches in einem System mit verschiedenen separaten Vorrichtungen ausgeführt wird, die die einzelnen Schritte des Verfahrens durchführen.

Es war die primäre Aufgabe der vorliegenden Erfindung die aus dem Stand der Technik bekannten Nachteile auszuräumen oder zumindest zu verringern.

Hierbei war es insbesondere eine Aufgabe der vorliegenden Erfindung, ein Verfahren zur Herstellung von Ausgangsmaterialien für die Reifenherstellung anzugeben, welches besonders zeit- und kosteneffizient betrieben werden kann.

Zudem war es eine Aufgabe der vorliegenden Erfindung, dass das anzugebende Verfahren apparativ möglichst einfach auszugestalten sein und einen möglichst kompakten Aufbau erlauben sollte, wobei vorzugsweise lediglich eine Arbeitsvorrichtung benötigt werden sollte.

Darüber hinaus war es eine Aufgabe der vorliegenden Erfindung, dass anzugebende Verfahren so auszugestalten, dass dieses in effizienter Weise kontinuierlich betreibbar ist.

Darüber hinaus war es insbesondere auch eine Aufgabe der vorliegenden Erfindung, das anzugebende Verfahren so auszugestalten, dass der Anteil an wiederverwerteten Materialien bei der Reifenherstellung weiter erhöht und damit die Recyclingquote verbessert werden kann.

Eine Aufgabe der vorliegenden Erfindung war es zudem, dass mit dem anzugebenden Verfahren Ausgangsmaterialien für die Reifenherstellung mit hervorragenden Verarbeitungseigenschaften herstellbar sein sollten, die insbesondere unmittelbar für die weitere Verarbeitung in der Reifenherstellung geeignet sein sollten.

Es war eine ergänzende Aufgabe der vorliegenden Erfindung, dass das anzugebende Verfahren durch Modifikation der in der Kautschukindustrie bereits vorhandenen Vorrichtungen einfach und kostengünstig ausführbar sein sollte, ohne einen Bedarf an neuen Vorrichtungen zu schaffen.

Es war zudem eine Aufgabe der vorliegenden Erfindung, dass das mit den anzugebenden Verfahren herstellbare Ausgangsmaterial wünschenswerterweise ein Hybridmaterial sein sollte, welches eine Kombination aus mehreren Materialien darstellt, die in der Produktion von modernen Fahrzeugreifen benötigt werden, um dadurch eine Effizienzsteigerung zu erreichen, eine einfachere Handhabung der Ausgangsmaterialien zu erlauben und unerwünschten Konzentrationsgradienten vorzubeugen.

Es war eine ergänzende Aufgabe der vorliegenden Erfindung, ein Verfahren zur Herstellung einer Kautschukmischung bzw. zur Herstellung eines Fahrzeugreifens anzugeben, wobei die damit herstellbaren Fahrzeugreifen wünschenswerterweise besonders günstige Eigenschaften ausweisen sollten.

Es war eine sekundäre Aufgabe der vorliegenden Erfindung, eine Arbeitsvorrichtung zur Durchführung des erfindungsgemäßen Verfahrens anzugeben. Zudem sollte ein Ausgangsmaterial für die Reifenherstellung und eine Kautschukmischung, welche dieses Ausgangsmaterial umfasst, angegeben werden. Darüber hinaus sollte ein Vulkanisat angegeben werden, welches aus dieser Kautschukmischung herstellbar ist. Weiterhin sollte ein Fahrzeugreifen angegeben werden, welcher das erfindungsgemäße Vulkanisat umfasst und welcher vorteilhafterweise über ausgezeichnete Fahreigenschaften verfügen sollte.

Abschließend war es die Aufgabe, eine Verwendung für Pyrolyse-Bindeöl anzugeben, welches durch Pyrolyse gewonnen wurde.

Die Erfinder der vorliegenden Erfindung haben nunmehr erkannt, dass die vorstehend beschriebenen Aufgaben gelöst werden können, wenn in einem Verfahren zur Herstellung von Ausgangsmaterialien für die Reifenherstellung mit den in den Ansprüchen definierten Schritten eine Arbeitsvorrichtung eingesetzt wird, wie sie in den Ansprüchen definiert ist, wobei die Arbeitsvorrichtung insbesondere zwei miteinander verbundene Bereiche, nämlich einen Mahlbereich und einen Mischbereich vorsieht, die von einem festen Pyrolyseprodukt nacheinander durchlaufen werden, wobei im Mischbereich eine Vermischung mit einem Bindeöl erfolgt. Hierbei haben die Erfinder der vorliegenden Erfindung herausgefunden, dass überraschenderweise beim Einsatz von Pyrolyse-Bindeöl und insbesondere einer besonderen Fraktion dieses Pyrolyse-Bindeöls besonders vorteilhafte Ausgangmaterialien erhalten werden können, wobei diese Materialien durch den besonders hohen Recyclinganteil auch noch besonders nachhaltig sind.

Die vorstehend genannten Aufgaben werden entsprechend durch Verfahren gelöst, wie sie in den Ansprüchen definiert sind. Bevorzugte erfindungsgemäße Ausgestaltungen ergeben sich aus den Unteransprüchen und den nachfolgenden Ausführungen. Einige der vorstehenden Aufgaben werden zudem durch Arbeitsvorrichtungen, Kautschukmischungen, Vulkanisate, Fahrzeugreifen und Verwendungen gelöst, wie sie nachfolgend offenbart sind.

Solche Merkmale erfindungsgemäßer Verfahren, die nachfolgend als bevorzugt bezeichnet sind, werden in besonders bevorzugten Ausführungsformen mit anderen als bevorzugt bezeichneten Merkmalen kombiniert. Ganz besonders bevorzugt sind somit Kombinationen von zwei oder mehr der nachfolgend als besonders bevorzugt bezeichneten Ausführungsformen. Ebenfalls bevorzugt sind Ausführungsformen, in denen ein in irgendeinem Ausmaß als bevorzugt bezeichnetes Merkmal mit einem oder mehreren weiteren Merkmalen kombiniert wird, die in irgendeinem Ausmaß als bevorzugt bezeichnet werden. Bevorzugte Merkmale der offenbarten Arbeitsvorrichtungen, Kautschukmischungen, Vulkanisate, Fahrzeugreifen und Verwendungen ergeben sich aus den Merkmalen bevorzugter Verfahren.

Die Erfindung betrifft ein, bevorzugt kontinuierliches, Verfahren zur Herstellung von Ausgangsmaterialien für die Reifenherstellung mit einer Arbeitsvorrichtung umfassend:
a1) einen Mahlbereich mit zumindest einer ersten Zugabeöffnung, zumindest einem Mahlwerkzeug zum Mahlen eines Feststoffs und zumindest einem ersten Förderwerkzeug zum Fördern eines Feststoffs durch den Mahlbereich, und
a2) einen mit dem Mahlbereich verbundenen Mischbereich mit zumindest einer zweiten Zugabeöffnung, zumindest einem Mischwerkzeug zum Mischen einer Dispersion, zumindest einer Auslassöffnung und zumindest einem zweiten Förderwerkzeug zum Fördern der Dispersion zu der Auslassöffnung,
wobei das Verfahren die folgenden Schritte umfasst:
v1) Eingeben eines festen Pyrolyseprodukts umfassend Ruß und/oder Siliciumdioxid in den Mahlbereich über die erste Zugabeöffnung, Mahlen des festen Pyrolyseprodukts im Mahlbereich zum Erhalt einer gemahlenen Zusammensetzung, und Fördern der gemahlenen Zusammensetzung aus dem Mahlbereich in den Mischbereich,
v2) Eingeben einer Bindeöl-Zusammensetzung in den Mischbereich über die zweite Zugabeöffnung und Mischen der gemahlenen Zusammensetzung mit der Bindeöl-Zusammensetzung zum Erhalt einer ölhaltigen Dispersion, und
v3) Ausleiten der ölhaltigen Dispersion aus dem Mischbereich durch die Auslassöffnung.

Mit dem erfindungsgemäßen Verfahren werden Ausgangsmaterialien für die Reifenherstellung hergestellt. Dies bedeutet, dass das in dem erfindungsgemäßen Verfahren erhaltene Produkt in der Reifenfertigung eingesetzt werden kann, insbesondere als Ausgangsmaterial bei der Herstellung von Kautschukmischungen, aus denen durch Vulkanisation Vulkanisate erhalten werden können, die beispielsweise Bestandteile von Fahrzeugreifen sein können.

Das erfindungsgemäße Verfahren wird erfindungsgemäß mit einer Arbeitsvorrichtung durchgeführt. Diese Arbeitsvorrichtung umfasst einen Mahlbereich und einen mit diesem Mahlbereich verbundenen Mischbereich. Bei dem Mahl- und Mischbereich der Arbeitsvorrichtung handelt es sich somit um Bereiche der gleichen Vorrichtung, die optional durch bauliche Maßnahmen teilweise voneinander getrennt sein können, beispielsweise durch eine zwischen den Bereichen angeordnete Rohrleitung.

Der Mahlbereich umfasst zumindest ein Mahlwerkzeug, welches dazu eingerichtet ist, einen Feststoff zu mahlen, d. h. die mittlere Partikelgröße im Feststoff zu reduzieren. Zudem umfasst der Mahlbereich ein erstes Förderwerkzeug, welches dazu eingerichtet ist, den zu mahlenden Feststoff durch den Mahlbereich hindurch zu fördern. Dies bedeutet, dass die erfindungsgemäß einzusetzende Arbeitsvorrichtung im Mahlbereich dazu eingerichtet ist, einen Feststoff gleichzeitig zu mahlen und durch den Mahlbereich zu fördern. Das zu mahlende Material wird in den Mahlbereich durch die erste Zugabeöffnung eingegeben.

Mit dem Mahlbereich verbunden ist der Mischbereich, welcher neben einer zweiten Zugabeöffnung für die Zugabe von Bindeöl auch ein Mischwerkzeug umfasst, welches dazu geeignet ist, eine Dispersion zu mischen, d. h. in einer Dispersion etwaige Konzentrationsgradienten auszugleichen. Das Mischwerkzeug ist somit dazu geeignet, eine feste und flüssige Phasen enthaltene Zusammensetzung zu mischen. Der Mischbereich verfügt über eine Auslassöffnung und ein zweites Förderwerkzeug, mit dem die Dispersion zu der Auslassöffnung geführt werden kann.

Der Fachmann versteht, dass die erste Zugabeöffnung bzw. die zweite Zugabeöffnung jeweils dazu eingerichtet sind, dass durch diese das feste Pyrolyseprodukt bzw. die Bindeölzusammensetzung in die Arbeitskammer der Arbeitsvorrichtung, d.h. in den Mahlbereich bzw. den Mischbereich, eingegeben werden können. In Übereinstimmung mit dem fachmännischen Verständnis handelt es sich somit weder bei der Auslassöffnung um eine erste oder zweite Zugabeöffnung im Sinne der Erfindung, noch bei dem Verbindungsbereich zwischen dem Mahlbereich und dem Mischbereich, auch wenn diese Bereiche in der Arbeitsvorrichtung durch bauliche Maßnahmen teilweise voneinander separiert sein können und ggf. Öffnungen aufweisen. Bevorzugt ist ein erfindungsgemäßes Verfahren, wobei die zweite Zugabeöffnung entlang der Arbeitsvorrichtung zwischen der ersten Zugabeöffnung und der Auslassöffnung angeordnet ist.

Das Ausgangsprodukt des erfindungsgemäßen Verfahrens ist ein festes Pyrolyseprodukt, d. h. eine Zusammensetzung, die das unmittelbare Produkt einer Pyrolysereaktion ist, oder Produkte einer Pyrolysereaktion umfasst. Das in dem erfindungsgemäßen Verfahren einzusetzende feste Pyrolyseprodukt umfasst dabei Ruß und/oder Siliciumdioxid. Dieses feste Pyrolyseprodukt wird über die erste Zugabeöffnung in den Mahlbereich gegeben und dort gemahlen. Zudem erfolgt ein Fördern der gemahlenen Zusammensetzung durch den Mahlbereich hindurch und schließlich aus dem Mahlbereich hinaus in den Mischbereich der Arbeitsvorrichtung.

In dem erfindungsgemäßen Verfahren wird neben der in den Mischbereich geförderten gemahlenen Zusammensetzung im Mischbereich eine Bindeöl-Zusammensetzung hinzugegeben. Diese Bindeöl-Zusammensetzung umfasst zumindest ein Bindeöl. Die Zugabe der Bindeöl-Zusammensetzung erfolgt dabei durch die zweite Zugabeöffnung. Nach der Zugabe erfolgt das Mischen der gemahlenen Zusammensetzung mit der Bindeöl-Zusammensetzung, welche durch das Mischwerkzeug bewirkt wird. Dadurch wird eine ölhaltige Dispersion erhalten, welche durch das zweite Förderwerkzeug zur Auslassöffnung befördert wird. Die ölhaltige Dispersion wird durch die Auslassöffnung aus dem Mischbereich ausgeleitet und kann als hochwertiges Ausgangsmaterial für die Reifenherstellung verwendet werden.

Wie vorstehend erläutert, ist dem Fachmann das Grundkonzept der Pyrolyse und der Weg zum Erhalt eines festen Pyrolyseprodukts aus dem Stand der Technik bekannt. In dem erfindungsgemäßen Verfahren kann das feste Pyrolyseprodukt hergestellt oder bereitgestellt werden. Dies bedeutet, dass bspw. Ruß unmittelbar durch Pyrolyse eines Pyrolysematerials, beispielsweise eines Kunststoffs, hergestellt werden kann, oder entsprechende durch Pyrolyse hergestellte Pyrolyseprodukte alternativ lediglich bereitgestellt werden, beispielsweise durch den Zukauf von einem Lieferanten. Bevorzugt ist insoweit ein erfindungsgemäßes Verfahren, wobei das feste Pyrolyseprodukt durch Pyrolyse eines Kunststoffprodukts, bevorzugt eines Kautschukprodukts, besonders bevorzugt eines Fahrzeugreifens, gewonnen wurde.

Für den Fachmann im Bereich der Pelletierung von pulverförmigen Zusammensetzung ist der Ausdruck Bindeöl klar und bezeichnet in Übereinstimmung mit dem fachmännischen Verständnis beispielsweise aromatische Öle, Mineralöl oder Paraffinöl. Entsprechende Materialien können vom Fachmann beispielsweise von Herstellern zugekauft werden.

Auch wenn die Bindeöl-Zusammensetzung prinzipiell weitere Bestandteile außer Bindeölen enthalten kann, ist es mit Blick auf die effiziente Verfahrensführung bevorzugt, wenn die Bindeöl-Zusammensetzung im Wesentlichen aus Bindeöl besteht. Dies ist insbesondere dadurch bedingt, dass es als Vorteil des erfindungsgemäßen Verfahrens gesehen werden kann, dass dieses ohne den Zusatz weiterer Additive die Verarbeitungseigenschaften des herzustellenden Ausgangsmaterials optimieren kann, sodass diese Additive nicht beispielsweise in eine anschließend hergestellte Kautschukmischung eingetragen werden müssen. Bevorzugt ist vor diesem Hintergrund ein erfindungsgemäßes Verfahren, wobei die Bindeöl-Zusammensetzung Bindeöl in einem Massenanteil im Bereich von 70 bis 100 %, bevorzugt im Bereich von 80 bis 100 %, besonders bevorzugt im Bereich von 90 bis 100 %, ganz besonders bevorzugt im Bereich von 95 bis 100 %, insbesondere bevorzugt im Bereich von 99 bis 100 %, umfasst, bezogen auf die Masse der Bindeöl-Zusammensetzung.

Unter Ausnutzung der erfindungsgemäß einzusetzenden Arbeitsvorrichtung ist es mit dem erfindungsgemäßen Verfahren vorteilhafterweise möglich, mit einer großen Zeit- und Kosteneffizienz besonders hochwertige Ausgangsmaterialien für die Reifenherstellung herzustellen, wobei überraschenderweise eine besonders platzsparende und kompakte Verfahrensführung möglich wird, die durch den geringen Platzbedarf zudem eine unmittelbare Einspeisung des hergestellten Ausgangsmaterials in das Mischaggregat einer Kautschukmischungsherstellung ermöglicht. Insbesondere letzter Aspekt kann als großer Vorteil der Erfindung gesehen werden, da hierdurch die Notwendigkeit entfällt, das Ausgangsmaterial vor Eingabe in die warme Kautschukmischung zusätzlich vorzuwärmen, wodurch die beim Mahlen und Mischen in das Ausgangsmaterial eingebrachte Energie in besonders effizienter Weise ausgenutzt wird, um den Gesamtenergieverbrauch bei der Mischungsherstellung zu reduzieren.

Durch das Mahlen wird das Pyrolyseprodukt hinsichtlich der Teilchengröße und der Schüttdichte optimiert, um anschließend mit einer spezifischen Substanz, nämlich Bideöl, vermischt und pelletiert zu werden, die sich als besonders vorteilhaft erwiesen hat, um für die Verarbeitung von Pyrolyseprodukten eingesetzt zu werden, sodass mit dem erfindungsgemäßen Verfahren vorteilhafte Ausgangsmaterialien erhalten werden können.

Durch ein synergistisches Zusammenwirken der einzelnen Verfahrensbestandteile umfasst das mit dem erfindungsgemäßen Verfahren hergestellte Ausgangsprodukt vorteilhafterweise nämlich auch das Bindeöl, welches regelmäßig ebenfalls Bestandteil von Kautschukmischungen für moderne Fahrzeugreifen ist. Mit dem im erfindungsgemäßen Verfahren hergestellten Ausgangsmaterial lassen sich somit in synergistischer Weise gleich mehrere Komponenten der Kautschukmischung bereitstellen, wodurch die Effizienz der Herstellung der Kautschukmischung deutlich gesteigert wird, wobei durch die ausgiebige Vormischung der Komponenten auch das Auftreten von Konzentrationsgradienten in der Kautschukmischung verringert wird.

Grundsätzlich ist es möglich, dass der Mahlbereich und der Mischbereich in der erfindungsgemäß einzusetzenden Arbeitsvorrichtung durch konstruktive Maßnahmen zumindest teilweise voneinander getrennt sind, beispielsweise durch Engstellen, Rohrleitungen oder Leitbleche. Als besonders vorteilhaft hat es sich jedoch herausgestellt, wenn der Mahlbereich und der Mischbereich lediglich unterschiedliche Zonen in einer ansonsten gleichmäßig ausgebildeten Arbeitskammer der Arbeitsvorrichtung sind, die sich vielmehr durch das Wirken der darin angeordneten Werkzeuge voneinander unterscheiden. Bevorzugt ist daher ein erfindungsgemäßes Verfahren, wobei der Mahlbereich und der Mischbereich unterschiedliche Zone in einem Gehäuse der Arbeitsvorrichtung sind. In anderen Worten lässt sich diese Ausgestaltung so beschreiben, dass der Mahlbereich und der Mischbereich Teil eines Arbeitsbereichs im Inneren der Arbeitsvorrichtung sind.

Grundsätzlich ist es vorstellbar, neben dem Mahlwerkzeug und dem Mischwerkzeug separate Förderwerkzeuge vorzusehen, bei denen es sich beispielsweise auch im Mischbereich und im Mahlbereich um unterschiedliche Förderwerkzeuge handeln kann. Eine besonders vorteilhafte Ausgestaltung des erfindungsgemäßen Verfahrens ergibt sich jedoch dann, wenn das Mahlwerkzeug und/oder das Mischwerkzeug so ausgebildet werden, dass diese gleichzeitig eine Förderung durch den Mischbereich bzw. den Mahlbereich bewirken. In diesem Fall wird eine besonders energieeffiziente Ausgestaltung erhalten, die zudem eine besonders platzsparende Vorrichtungskonstruktion ermöglicht. Bevorzugt ist somit ein erfindungsgemäßes Verfahren, wobei das erste Förderwerkzeug durch das Mahlwerkzeug gebildet wird, und/oder wobei das zweite Förderwerkzeug durch das Mischwerkzeug gebildet wird.

In einer ganz besonders bevorzugten Ausgestaltung handelt es sich bei der Arbeitsvorrichtung um einen Extruder, insbesondere einen Extruder, welcher mit einer Schneckenwelle versehen ist. Es kann als großer Vorteil des erfindungsgemäßen Verfahrens gesehen werden, dass herkömmliche Extruder durch relativ kleine Modifikation der Vorrichtung in besonders effizienter Weise in Arbeitsvorrichtung für das besonders bevorzugte Verfahren umgesetzt werden können, wobei zumeist insbesondere eine zweite Zugabeöffnung für die Bindeöl-Zusammensetzung vorgesehen werden muss. Die Schnecken des Extruders fungieren dabei als Förderwerkzeuge, die das feste Pyrolyseprodukt bzw. nach Zugabe der Bindeöl-Zusammensetzung auch die ölhaltige Dispersion durch den Extruder in Richtung der Auslassöffnung befördern. Bevorzugt ist also ein erfindungsgemäßes Verfahren, wobei die Arbeitsvorrichtung ein Extruder, bevorzugt ein Schneckenextruder mit einer, zwei oder mehreren Schneckenwellen, besonders bevorzugt ein Ringextruder oder ein Schneckenextruder mit zwei Schneckenwellen, ist.

Grundsätzlich ist es möglich, den Mahlbereich, d. h. den Bereich zwischen der ersten und der zweiten Zugabeöffnung mit separaten Mahlwerkzeugen zu versehen und/oder im Mischbereich, d. h. zwischen der zweiten Zugabeöffnung und dem Auslass, separate Mischwerkzeuge vorzusehen. Diese konstruktive Ausgestaltung des Extruders ist jedoch mit relativ großen Umbaumaßnahmen verbunden und wird zuweilen als apparativ aufwendig empfunden. Es hat sich als besonders vorteilhaft erwiesen, die Schneckenwellen des Extruders als Mahlwerkzeuge und Mischwerkzeuge zu verwenden. Hierbei ist es möglich, die gewünschte Wirkung, d. h. Mahlen oder Mischen, durch die bauliche Ausgestaltung der Schneckenwellen zu beeinflussen. Durch die Ausgestaltung des Gehäuses und der zugehörigen Schneckenwellen werden im Mahlbereich vergleichsweise große Scherkräfte eingestellt, was insbesondere in einem Extruder mit zwei oder mehr Schneckenwellen effizient erfolgen kann. Die Art der Schneckenwellen im Mischbereich wird in diesem Fall hingegen so eingestellt, dass vergleichsweise weniger Scherkräfte wirken und hingegen ein möglichst großer Durchfluss erreicht wird. Dies kann beispielsweise mit einem Extruder geschehen, welcher lediglich eine Schnecke aufweist. Bevorzugt ist somit ein erfindungsgemäßes Verfahren, wobei das Mahlwerkzeug und das Mischwerkzeug voneinander verschieden sind, wobei sich der Mahlbereich und der Mischbereich bevorzugt durch die Art und/oder Anzahl der als Werkzeuge eingesetzten Schneckenwellen unterscheiden.

In Übereinstimmung mit dem fachmännischen Verständnis besteht der Unterschied zwischen den Arbeitsschritten des Mahlens und des Mischens in dem Ausmaß der wirkenden Scherkräfte. Wiederum in Übereinstimmung mit dem fachmännischen Verständnis ist jedes Mahlen immer auch teilweise ein Mischen und der Schritt des Mischens kann immer auch die teilweise Verringerung des Partikeldurchmessers der gemischten Komponenten beinhalten. Für den Fachmann ist jedoch zwanglos zu unterscheiden, ob bei einem Arbeitsschritt das Mahlen oder das Mischen im Vordergrund steht. Im Rahmen der vorliegenden Erfindung kann dieser Aspekt jedoch ohnehin dahingestellt bleiben, da es erst nach Zugabe der Bindeöl-Zusammensetzung zu einem Mischen im Sinne der Erfindung kommt. Prinzipiell wäre es insoweit auch möglich, dieses Mischen mit einem Werkzeug vorzunehmen, welches in der Ausgestaltung dem im Mahlbereich zum Mahlen verwendeten Mahlwerkzeug entspricht. Diese Ausgestaltung, in der die ölhaltige Dispersion beim Mischen relativ großen Scherkräften ausgesetzt wird, ist mit Blick auf die benötigte Energie und den Durchsatz jedoch als weniger vorteilhaft anzusehen. Bevorzugt ist nach Einschätzung der Erfinder somit ein erfindungsgemäßes Verfahren, wobei die vom Mahlwerkzeug auf das feste Pyrolyseprodukt ausgeübten Scherkräfte größer sind als die Scherkräfte, die vom Mischwerkzeug auf die ölhaltige Dispersion ausgeübt werden, wobei die vom Mahlwerkzeug ausgeübte Scherrate bevorzugt im Bereich von 500 bis 10000 1/s, besonders bevorzugt im Bereich von 1000 bis 2000 1/s, liegt.

Es kann als Vorteil des erfindungsgemäßen Verfahrens gesehen werden, dass der Einsatz einer einzigen Arbeitsvorrichtung mit verbundenen Misch- und Mahlbereichen ein besonders energieeffizientes Temperaturmanagement ermöglicht. Hierbei wird beispielsweise in synergistischer Weise die beim Mahlen bewirkte Temperaturerhöhung genutzt, um im Mischbereich, wo aus verarbeitungstechnischer Sicht höhere Temperaturen ohnehin wünschenswert sind, möglichst energieeffizient eine geeignete Arbeitstemperatur einzustellen, so dass möglichst wenig geheizt werden muss. Trotzdem ist es mit Blick auf eine effiziente Verarbeitung vorteilhaft, wenn ein zusätzliches Temperaturmanagementsystem vorgesehen wird, mit dem die Temperatur im Verfahren gesteuert werden kann. Insbesondere wenn im Anschluss die unmittelbare Eingabe des hergestellten Ausgangsprodukts in eine Kautschukmischung erfolgen soll, die selbst wiederum bei höheren Temperaturen verarbeitet wird, ist eine Durchführung des erfindungsgemäßen Verfahrens bei erhöhten Temperaturen sinnvoll. Wie vorstehend erläutert, kann es als großer Vorteil des erfindungsgemäßen Verfahrens gesehen werden, dass der Kautschukmischung in diesem Fall ein bereits vortemperiertes Ausgangsmaterial zugesetzt wird, welches Ruß und/oder Siliciumdioxid umfasst und in der Kautschukmischung weniger unerwünschte Temperaturgradienten erzeugt, die im Mischaggregat ausgeglichen werden müssten. Bevorzugt ist folglich ein erfindungsgemäßes Verfahren, wobei die Arbeitsvorrichtung eine Heizeinheit und/oder ein Kühlsystem zum Temperieren des Mahlbereichs und/oder Mischbereichs umfasst.

Bevorzugt ist insoweit auch ein erfindungsgemäßes Verfahren, wobei das Mahlen und/oder das Mischen, bevorzugt das Mahlen und das Mischen, bei einer Temperatur im Bereich von 50 bis 150 °C, bevorzugt im Bereich von 60 bis 130 °C, besonders bevorzugt im Bereich von 70 bis 110 °C, erfolgt.

Um auch große Mengen des wegen seiner geringen Schüttdichte häufig schwer zu handhabenden Pyrolyseprodukts effizient in die Vorrichtung eingeben zu können, hat es sich als vorteilhaft erwiesen, einen Trichter an der ersten Zugabeöffnung vorzusehen. Aus dem gleichen Grund ist es zielführend, die zweite Zugabeöffnung fluidleitend mit einem Versorgungssystem für die Bereitstellung der Bindeöl-Zusammensetzung zu verknüpfen. Bevorzugt ist entsprechend ein erfindungsgemäßes Verfahren, wobei an der ersten Zugabeöffnung ein Trichter vorgesehen ist. Bevorzugt ist ebenfalls ein erfindungsgemäßes Verfahren, wobei die zweite Zugabeöffnung fluidleitend mit einem Reservoir zur Aufnahme der Bindeöl-Zusammensetzung verbunden ist.

Die Erfinder der vorliegenden Erfindung haben bei der Konzeption der erfindungsgemäß einzusetzenden Arbeitsvorrichtung versucht, den optimalen Eingabepunkt der Bindeöl-Zusammensetzung, d.h. die Position der zweiten Zugabeöffnung, zu identifizieren, wodurch in den von den Erfindern verwendeten Aufbauten die Größe des Misch- bzw. Mahlbereichs festgelegt wurde. Hierbei konnten es die Erfinder der vorliegenden Erfindung als besonders vorteilhaft identifizieren, wenn der Mischbereich größer gewählt wird als der Mahlbereich. In entsprechenden Aufbauten wurden ölhaltige Dispersion mit einer besonders günstigen Homogenität und ausgezeichneten Verarbeitungseigenschaften erhalten, wobei gleichzeitig die Mahlleistung als ausreichend identifiziert wurde. Bevorzugt ist vor diesem Hintergrund ein erfindungsgemäßes Verfahren, wobei das Volumen des Mischbereichs um mehr als 25 %, bevorzugt mehr als 50 %, besonders bevorzugt mehr als 75 %, größer ist als das Volumen des Mahlbereichs.

Um eine effiziente Verfahrensführung zu ermöglichen, insbesondere in einem kontinuierlichen Verfahren, hat es sich als besonders vorteilhaft erwiesen, die Mahlwerkzeuge und/oder Mischwerkzeuge, sowie zusätzlich oder alternativ die Förderwerkzeuge durch einen Motor antreiben zu lassen, wobei der Einsatz eines Elektromotors mit Blick auf eine insgesamt möglichst nachhaltige und ressourcenschonende Reifenproduktion als besonders vorteilhaft angesehen werden kann. Bevorzugt ist somit ein erfindungsgemäßes Verfahren, wobei das Mahlwerkzeug und/oder das Mischwerkzeug der Arbeitsvorrichtung durch einen Motor, bevorzugt einen Elektromotor, angetrieben werden.

In einer besonders bevorzugten Ausführungsform sind das Mahlwerkzeug und/oder das Mischwerkzeug und/oder das erste Förderwerkzeug und/oder das zweite Förderwerkzeug, bevorzugt sämtliche Werkzeuge, mit einer Steuerungseinheit verbunden, die dazu eingerichtet ist, das jeweilige Werkzeug in Abhängigkeit von der an der Auslassöffnung durch eine Sensoreinheit detektierten Beschaffenheit des Ausgangsmaterials für die Reifenproduktion zu steuern.

Die Erfinder der vorliegenden Erfindung konnten bei der Entwicklung des erfindungsgemäßen Verfahrens eine besonders günstige Ausgestaltung identifizieren, die insbesondere mit Blick auf die Nachhaltigkeit des Gesamtverfahrens -jedoch überraschenderweise auch mit Blick auf die Qualität des erhaltenen Ausgangsmaterials für die Reifenherstellung- als besonders vorteilhaft identifiziert werden konnte und die einen besonders relevanten Aspekt der vorliegenden Erfindung ausmacht. In dem erfindungsgemäßen Verfahren ist es nämlich vorteilhafterweise möglich, als Bindeöl ein Pyrolyse-Bindeöl einzusetzen. Ein Pyrolyse-Bindeöl ist ein Bindeöl, welches selbst durch Pyrolyse hergestellt wurde, beispielsweise durch Pyrolyse eines Kunststoffprodukts, insbesondere eines Kautschukprodukts, beispielsweise eines Fahrzeugreifens. Diese Pyrolyse-Bindeöle weisen regelmäßig eine komplexere Zusammensetzung auf als vergleichbare industrielle Öle, welche nicht aus recycelten Materialien erhalten werden. Deshalb erschien es den Erfindern zunächst nicht naheliegend, ein Pyrolyse-Bindeöl einzusetzen, da dieses als potentiell nachteilig für die Qualität der herzustellenden Ausgangsmaterialien angenommen wurde, insbesondere angesichts des Umstandes, dass bereits mit dem festen Pyrolyseprodukt ein Startmaterial verwendet wird, welches häufig nicht den Spezifikationen von frisch hergestellten Materialien entspricht. Überraschenderweise wurde nun gefunden, dass in dem erfindungsgemäßen Verfahren, welches ein festes Pyrolyseprodukt einsetzt und in der spezifischen Arbeitsvorrichtung verarbeitet, der Einsatz von Pyrolyse-Bindeöl nicht nur nicht schädlich ist, sondern sogar zu einem Ausgangsmaterial für die Reifenherstellung führt, welches beim Einsatz in den weiteren Verarbeitungsschritten in besonders günstigen Kautschukmischungen resultiert, die wiederum zu besonders leistungsfähigen Reifen umgesetzt werden können. Ohne an diese Theorie gebunden sein zu wollen, gehen die Erfinder der vorliegenden Erfindung davon aus, dass Pyrolyse-Bindeöl eine chemisch besonders hohe Kompatibilität mit dem ebenfalls durch Pyrolyse hergestellten festen Pyrolyseprodukt aufweist. Als besonders vorteilhaft hat es sich dabei erwiesen, wenn das Pyrolyse-Bindeöl selbst aus Fahrzeugreifen hergestellt wurde. Ohne an diese Theorie gebunden sein zu wollen, gehen die Erfinder der vorliegenden Erfindung davon aus, dass Pyrolyse-Bindeöl, welches aus der Pyrolyse von Fahrzeugreifen stammt, eine inhärent hohe Kompatibilität mit einer Kautschukmischung aufweist, welche selbst wiederum zu Fahrzeugreifen umgesetzt werden soll. Als besonders günstige Weiterentwicklung haben die Erfinder der vorliegenden Erfindung dabei identifiziert, dass idealerweise das Pyrolyseprodukt und die das Pyrolyse-Bindeöl umfassende Zusammensetzung im gleichen PyrolyseProzess hergestellt werden, sodass das Pyrolyse-Bindeöl ein Nebenprodukt des festen Pyrolyseprodukts ist (bzw. anders herum). Bevorzugt ist somit zusammenfassend ein erfindungsgemäßes Verfahren, wobei die Bindeöl-Zusammensetzung ein Pyrolyse-Bindeöl umfasst, welches durch Pyrolyse eines Kunststoffprodukts, bevorzugt eines Kautschukprodukts, besonders bevorzugt eines Fahrzeugreifens, gewonnen wurde, wobei das Pyrolyse-Bindeöl vorzugsweise ein Nebenprodukt der Herstellung des festen Pyrolyseprodukts ist.

Vor diesem Hintergrund ist es besonders vorteilhaft, wenn das erfindungsgemäße Verfahren auch die Herstellungsschritte des festen Pyrolyseprodukts und/oder der Bindeöl-Zusammensetzung in der Form eines Pyrolyse-Bindeöls umfasst. Bevorzugt ist demnach ein erfindungsgemäßes Verfahren, zusätzlich umfassend einen oder beide der folgenden Schritte:
v0a) Herstellen des eines festen Pyrolyseprodukts umfassend Ruß und/oder Siliciumdioxid durch Pyrolyse eines Kunststoffprodukts, bevorzugt eines Kautschukprodukts, besonders bevorzugt eines Fahrzeugreifens,
   und/oder
v0b) Herstellen der Bindeöl-Zusammensetzung durch Pyrolyse eines Kunststoffprodukts, bevorzugt eines Kautschukprodukts, besonders bevorzugt eines Fahrzeugreifens,
wobei das Verfahren bevorzugt beide Schritte v0a) und v0b) umfasst, wobei die Herstellung besonders bevorzugt in beiden Schritte v0a) und v0b) durch Pyrolyse des gleichen Kunststoffprodukts, ganz besonders bevorzugt gleichzeitig, erfolgt.

Analog zu den vorstehenden Überlegungen zum Anteil des Bideöls in der Bindeöl-Zusammensetzung ist es ganz besonders bevorzugt, wenn die Bindeöl-Zusammensetzung im Wesentlichen aus Pyrolyse-Bindeöl besteht, auch wenn bereits der Zusatz kleiner Mengen an Pyrolyse-Bindeöl die Nachhaltigkeit des erfindungsgemäßen Verfahrens in vorteilhafterweise steigert. Bevorzugt ist also ein erfindungsgemäßes Verfahren, wobei die Bindeöl-Zusammensetzung Pyrolyse-Bindeöl in einem Massenanteil im Bereich von 70 bis 100 %, bevorzugt im Bereich von 80 bis 100 %, besonders bevorzugt im Bereich von 90 bis 100 %, ganz besonders bevorzugt im Bereich von 95 bis 100 %, insbesondere bevorzugt im Bereich von 99 bis 100 %, umfasst, bezogen auf die Masse der Bindeöl-Zusammensetzung.

Es kann als Vorteil des erfindungsgemäßen Verfahrens gesehen werden, dass dieses hinsichtlich der chemischen Zusammensetzung des festen Pyrolyseprodukts besonders flexibel ist und nach Einschätzung der Erfinder eine breite Palette an festen Pyrolyseprodukten verarbeitet werden kann. So ist insbesondere die Verarbeitung von solchen festen Pyrolyseprodukten möglich, die vor allem aus Ruß oder vor allem aus Siliciumdioxid bestehen, wodurch vorteilhafterweise besonders reine Produkte erhalten werden können, die bei der weiteren Verarbeitung bspw. eine besonders gezielte Einstellung der Füllstoff-Zusammensetzung in einer Kautschukmischung ermöglichen.

Bevorzugt ist im Lichte der vorstehenden Ausführungen ein erstes alternatives erfindungsgemäßes Verfahren, wobei das feste Pyrolyseprodukt Ruß in einem Massenanteil im Bereich von 70 bis 100 %, bevorzugt im Bereich von 80 bis 100 %, besonders bevorzugt im Bereich von 90 bis 100 %, ganz besonders bevorzugt im Bereich von 95 bis 100 %, umfasst, bezogen auf die Masse des festen Pyrolyseprodukts.

Bevorzugt ist im Lichte der vorstehenden Ausführungen alternativ ein zweites alternatives erfindungsgemäßes Verfahren, wobei das feste Pyrolyseprodukt Siliciumdioxid in einem Massenanteil im Bereich von 70 bis 100 %, bevorzugt im Bereich von 80 bis 100 %, besonders bevorzugt im Bereich von 90 bis 100 %, ganz besonders bevorzugt im Bereich von 95 bis 100 %, umfasst, bezogen auf die Masse des festen Pyrolyseprodukts.

Nach Einschätzung der Erfinder der vorliegenden Erfindung stellt dabei die vorstehend offenbarte Möglichkeit zur Verarbeitung von Siliciumdioxidreichen Pyrolyseprodukten, welche mittels Pyrolyse aus alten Produkten, beispielsweise Fahrzeugluftreifen, gewonnen wurde, eine besonders vorteilhafte Ausgestaltung des erfindungsgemäßen Verfahrens dar.

Aufgrund des hohen Bedarfs an Ruß stellt das erfindungsgemäße Verfahren, bei welchem das Pyrolyseprodukt Ruß umfasst, jedoch einen der wirtschaftlich relevantesten Fälle dar. Bevorzugt ist folglich ein erfindungsgemäßes Verfahren, wobei das feste Pyrolyseprodukt Ruß umfasst.

Als ganz besonders vorteilhaft mit Blick auf das erhaltenen Ausgangsmaterial für die Reifenherstellung hat es sich erwiesen, wenn das feste Pyrolyseprodukt sowohl Ruß als auch Siliciumdioxid umfasst. Die Flexibilität des erfindungsgemäßen Verfahrens ist hierbei ein großer Vorteil gegenüber dem aus dem Stand der Technik bekannten Verfahren, die regelmäßig keine Mischungen verarbeiten und umsetzen können. Insbesondere in der Kombination mit Pyrolyse-Bindeöl werden hierbei besonders vorteilhafte Ausgangsmaterialien für die Reifenherstellung erhalten, bei denen eine hohe chemische Kompatibilität der einzelnen Komponenten vorliegt. Zudem ist es hierdurch möglich, ein Ausgangsmaterial bereitzustellen, welches sowohl Ruß als auch Siliciumdioxid mit geeigneten Partikelgrößen umfasst, sodass diese Komponenten gemeinsam und vorgemischt in eine Kautschukmischung eingegeben werden können, was besonders zeit- und kosteneffizient ist und das Auftreten von ungewünschten Konzentrationsgradienten durch die Vormischung in synergistischer Weise verhindert. Bevorzugt ist entsprechend ein erfindungsgemäßes Verfahren, wobei das feste Pyrolyseprodukt bevorzugt Ruß und Siliciumdioxid umfasst.

Auch wenn es grundsätzlich möglich ist, besonders Siliciumdioxid-reiche feste Pyrolyseprodukte zu verarbeiten, ist es mit Blick auf die Verarbeitbarkeit des festen Pyrolyseprodukts, insbesondere während des Schrittes des Mahlens, vorteilhaft, wenn dieses überwiegend aus Ruß besteht. Bevorzugt ist daher ein erfindungsgemäßes Verfahren, wobei das feste Pyrolyseprodukt Ruß und Siliciumdioxid in einem Massenverhältnis im Bereich von 99:1 bis 2:1, bevorzugt im Bereich von 20:1 bis 3:1, besonders bevorzugt im Bereich von 10:1 bis 4:1, umfasst.

Wie vorstehend erläutert, kann es als besonderer Vorteil des erfindungsgemäßen Verfahrens gesehen werden, dass das feste Pyrolyseprodukt im erfindungsgemäßen Verfahren auch mit geringen Schüttdichten eingesetzt werden kann, wobei trotzdem Ausgangsmaterialien für die Herstellung von Fahrzeugreifen erhalten werden, die über ausgezeichnete Verarbeitungseigenschaften verfügen. Bevorzugt ist somit wegen des besonders ausgeprägten Effekts ein erfindungsgemäßes Verfahren, wobei der Ruß im festen Pyrolyseprodukt vor dem Mahlen eine Schüttdichte im Bereich von 200 bis 600 kg/m³, bevorzugt im Bereich von 300 bis 500 kg/m³, aufweist, und/oder wobei das Siliciumdioxid im festen Pyrolyseprodukt vor dem Mahlen eine Schüttdichte im Bereich von 100 bis 400 kg/m³, bevorzugt im Bereich von 200 bis 300 kg/m³, aufweist.

Das Siliciumdioxid ist bevorzugt amorphes Siliciumdioxid, beispielsweise gefällte Kieselsäure, die auch als gefälltes Siliciumdioxid bezeichnet wird. Alternativ kann aber beispielsweise auch pyrogenes Siliciumdioxid eingesetzt werden. In Übereinstimmung mit dem fachmännischen Verständnis im Bereich der Reifenproduktion werden entsprechende Materialien auch kurz als Kieselsäure oder Silica bezeichnet. Bevorzugt ist also ein erfindungsgemäßes Verfahren, wobei das Siliciumdioxid amorphes Siliciumdioxid, bevorzugt gefällte Kieselsäure, ist.

Im Zuge der Optimierung des erfindungsgemäßen Verfahrens und insbesondere im Kontext des überaschenderweise vorteilhaften Einsatzes von Pyrolyse-Bindeöl zur Herstellung besonders vorteilhafter Ausgangsmaterialien, konnten die Erfinder der vorliegenden Erfindung überraschenderweise identifizieren, dass einige Pyrolyse-Bindeöle besser geeignet sind als andere. So wurde festgestellt, dass herausragende Eigenschaften des herzustellenden Ausgangsprodukts für die Herstellung von Fahrzeugreifen dann erreicht werden können, wenn insbesondere die schwere Fraktion des Pyrolyse-Bindeöls eingesetzt wird, welche beispielsweise mittels Destillation von den leichteren Bestandteilen abgetrennt wurde. Die Erfinder der vorliegenden Erfindung konnten insoweit besonders günstige Siedepunkte identifizieren, die als geeignete Kriterien für die Auswahl eines bevorzugten schweren Pyrolyse-Bindeöls geeignet sind. Bevorzugt ist nämlich ein erfindungsgemäßes Verfahren, wobei die Bindeöl-Zusammensetzung ein schweres Pyrolyse-Bindeöl mit einem Siedepunkt von mehr als 150 °C, bevorzugt von mehr als 180 °C, besonders bevorzugt mehr als 210 °C, umfasst, welches vorzugsweise durch Abtrennung der leichten Phase eines Pyrolyse-Bindeöls mittels Destillation erhalten wurde.

Analog zu den vorstehenden Ausführungen zum Anteil des Pyrolyse-Bindeöls ist es besonders vorteilhaft, wenn in dem erfindungsgemäßen Verfahren für die Bindeöl-Zusammensetzung überwiegend schweres Pyrolyse-Bindeöl eingesetzt wird. Bevorzugt ist insoweit ein erfindungsgemäßes Verfahren, wobei die Bindeöl-Zusammensetzung schweres Pyrolyse-Bindeöl in einem Massenanteil im Bereich von 70 bis 100 %, bevorzugt im Bereich von 80 bis 100 %, besonders bevorzugt im Bereich von 90 bis 100 %, ganz besonders bevorzugt im Bereich von 95 bis 100 %, insbesondere bevorzugt im Bereich von 99 bis 100 %, umfasst, bezogen auf die Masse der Bindeöl-Zusammensetzung.

Bevorzugt ist ein erfindungsgemäßes Verfahren, wobei die Bindeöl-Zusammensetzung ein oder mehr Bindeöle umfasst, die ausgewählt sind aus der Gruppe bestehend aus aromatischen Ölen, Parafinölen und olefinischen Ölen.

Es kann als Vorteil des erfindungsgemäßen Verfahrens gesehen werden, dass die ausgeleitete ölhaltige Dispersion bereits als Paste eine ausgezeichnete Verarbeitbarkeit aufweist und in dieser Form beispielsweise unmittelbar zur Herstellung von Kautschukmischungen verwendet werden kann. Insbesondere wenn die entsprechenden Ausgangsmaterialien für die Reifenherstellung jedoch gelagert und/oder transportiert werden sollen, hat es sich als besonders vorteilhaft erwiesen, diese als Pellets bereitzustellen. Bevorzugt ist also ein erfindungsgemäßes Verfahren, wobei die ölhaltige Dispersion als Paste oder Pellets, bevorzugt als Pellets, ausgeleitet wird, wobei die Pellets bevorzugt durch einen an der Auslassöffnung angeordneten Pelletierer ausgeformt werden.

Im Lichte der vorstehenden Ausführungen ist für den Fachmann klar ersichtlich, dass es als besonderer Vorteil des erfindungsgemäßen Verfahrens gesehen werden kann, dass dieses in einem vergleichsweise kompakten Aufbau eine kontinuierliche Verfahrensführung ermöglicht, sodass das Verfahren besonders zeit- und kosteneffizient betrieben werden kann. Bevorzugt ist somit auch explizit ein erfindungsgemäßes Verfahren, wobei das Verfahren als kontinuierliches oder halbkontinuierliches Verfahren, bevorzugt als kontinuierliches Verfahren, betrieben wird.

Insbesondere wenn die Qualität des durch Pyrolyse erhaltenen Rußes im festen Pyrolyseprodukt unbefriedigend ist, hat es sich als vorteilhaft erwiesen, dem festen Pyrolyseprodukt zusätzlich auch Ruß beizumengen, der nicht durch Pyrolyse erhalten wurde (vom Fachmann auch als "virgin carbon black" bezeichnet). Bevorzugt ist demgemäß ein erfindungsgemäßes Verfahren, wobei in Schritt v1) neben dem festen Pyrolyseprodukt auch Ruß in den Mahlbereich gegeben wird, welcher nicht durch Pyrolyse erhalten wurde.

Die Erfinder der vorliegenden Erfindung schlagen vor, dass das Mahlen im Mahlbereich derart eingestellte wird, dass eine bestimmte maximale mittlere Teilchengröße nicht überschritten wird, wobei insbesondere eine enge Partikelgrößenverteilung vorteilhaft ist. Nach Einschätzung der Erfinder führen diese kleinen Partikelgrößen und die enge Partikelgrößenverteilung, die mit dem erfindungsgemäßen Verfahren in vorteilhafterweise erreicht werden können, zu guten physikalischchemische Eigenschaften in den mit diesen Ausgangsmaterialien hergestellten Kautschukmischungen bzw. den daraus erhaltenen Fahrzeugreifen, insbesondere hinsichtlich der mechanischen Eigenschaften und des Abriebs. Dadurch eignen sich mit dem erfindungsgemäßen Verfahren hergestellte Kautschukmischungen und die daraus gewonnenen Fahrzeugreifen besonders für Hochleistungsanwendungen. Bevorzugt ist ein erfindungsgemäßes Verfahren, wobei der Ruß und/oder das Siliciumdioxid in der gemahlenen Zusammensetzung eine mittlere Teilchengröße D95 kleiner als 25 µm, bevorzugt kleiner als 20 µm, besonders bevorzugt kleiner als 15 µm, aufweist, wobei die Partikelgrößenverteilung mittels Laserbeugung bestimmt wird, insbesondere mit einem "Mastersizer 3000" der Firma Malvern.

Grundsätzlich ist es möglich, zumindest einen Teil des Bindeöls bereits im Mahlbereich zuzusetzen, insbesondere, wenn in synergistischer Weise eine Schmierung der Mahlwerkzeuge sichergestellt werden soll, ohne zusätzliche Öle in das herzustellende Ausgangsprodukt für die Reifenfertigung einzutragen. Als besonders bevorzugt hat es sich jedoch erwiesen, das feste Pyrolyseprodukt im Wesentlichen im trockenen Zustand zu mahlen und das Bindeöl entsprechend erst im Mischbereich zuzugeben. Bevorzugt ist deshalb ein erfindungsgemäßes Verfahren, wobei der Massenanteil von Bindeöl in der gemahlenen Zusammensetzung im Bereich von 0 bis 15 %, bevorzugt im Bereich von 0 bis 7,5 %, besonders bevorzugt im Bereich von 0 bis 5 %, ganz besonders bevorzugt im Bereich von 0 bis 1 %, liegt, bezogen auf die Masse der gemahlenen Zusammensetzung, wobei die gemahlene Zusammensetzung insbesondere bevorzugt im Wesentlichen frei von Bindeöl ist.

Die Erfindung betrifft zudem ein Verfahren zur Herstellung einer Kautschukmischung für die Herstellung von Fahrzeugreifen, umfassend die Schritte des erfindungsgemäßen Verfahrens zur Herstellung von Ausgangsmaterialien für die Reifenherstellung, sowie zusätzlich den Schritt:
v4) Einbringen der ölhaltigen Dispersion in ein Mischaggregat und Mischen der ölhaltigen Dispersion mit zumindest einem Kautschuk zum Erhalt einer füllstoffhaltigen Kautschukmischung, wobei das Einbringen gemäß Schritt v4) bevorzugt derart unmittelbar nach Schritt v3) erfolgt, dass die ölhaltige Dispersion aus der Auslassöffnung in das Mischaggregat gegeben wird.

Es kann als besonderer Vorteil des erfindungsgemäßen Verfahrens zur Herstellung einer Kautschukmischung für die Herstellung von Fahrzeugreifen gesehen werden, dass durch das erfindungsgemäße Verfahren zur Herstellung von Ausgangsmaterialien für die Reifenherstellung solche Ausgangsmaterialien erhalten werden, die über ausgezeichnete Verarbeitungseigenschaften verfügen und in bevorzugten Ausgestaltungen gleich mehrere Komponenten umfassen, die für die Herstellung von Kautschukmischungen für Fahrzeugreifen erforderlich sind. Insbesondere beim Einsatz von solchen Ausgangsmaterialien, die mittels des Einsatzes von Pyrolyse-Bindeöl, insbesondere schwerem Pyrolyse-Bindeöl, hergestellt wurden, werden durch Mischung mit zumindest einem Kautschuk füllstoffhaltige Kautschukmischungen mit ausgezeichneten Verarbeitungseigenschaften erhalten, die zu besonders günstigen Fahrzeugreifen umgesetzt werden können. Wie zuvor erläutert, kann es als weiterer Vorteil des erfindungsgemäßen Verfahrens gesehen werden, dass die kompakte Arbeitsvorrichtung problemlos in der Nähe des Mischaggregats aufgestellt werden kann, sodass diesem das Ausgangsmaterial für die Herstellung von Fahrzeugreifen unmittelbar aus der Arbeitsvorrichtung bereitgestellt werden kann. Dies ist besonders kosten- und energieeffizient, da die beim Mahlen und Mischen vorherrschende erhöhte Temperatur des Ausgangsmaterials ein zusätzliches Vorwärmen des Ausgangsmaterials überflüssig macht und das Ausgangsmaterial vorteilhafterweise unmittelbar mit der Kautschukmischung vermischt werden kann, ohne das Auftreten von großen Temperaturgradienten zu bedingen.

Bevorzugt ist dabei ein erfindungsgemäßes Verfahren, wobei der Kautschuk ein Dienkautschuk ist, wobei der Dienkautschuk bevorzugt ausgewählt ist aus der Gruppe bestehend aus natürlichem Polyisopren, synthetischem Polyisopren, epoxidiertem Polyisopren, Butadien-Kautschuk, lösungspolymerisiertem Styrol-Butadien-Kautschuk, emulsionspolymerisiertem Styrol-Butadien-Kautschuk, Polynorbornen, Ethylen-Propylen-Dien-Kautschuk, Nitril-Kautschuk, Acrylat-Kautschuk, Silikon-Kautschuk, Polysulfid-Kautschuk, Epichlorhydrin-Kautschuk, Styrol-Isopren-Butadien-Terpolymer, hydrierter Acrylnitrilbutadienkautschuk, Isopren-Butadien-Copolymer und hydriertem Styrol-Butadien-Kautschuk, wobei der Dienkautschuk besonders bevorzugt ausgewählt ist aus der Gruppe bestehend aus natürlichem Polyisopren (NR), synthetischem Polyisopren (IR), Butadien-Kautschuk (BR), lösungspolymerisiertem Styrol-Butadien-Kautschuk (SSBR) und emulsionspolymerisiertem Styrol-Butadien-Kautschuk (ESBR).

Die Erfindung betrifft auch ein Verfahren zur Herstellung eines Fahrzeugreifens, bevorzugt eines Fahrzeugluftreifens, umfassend die Schritte des erfindungsgemäßen Verfahrens zur Herstellung von Ausgangsmaterialien für die Reifenherstellung oder die Schritte des erfindungsgemäßen Verfahrens zur Herstellung einer Kautschukmischung für die Herstellung von Fahrzeugreifen, sowie zusätzlich den Schritt:
v5) Vulkanisieren eines Reifenrohlings umfassend die füllstoffhaltige Kautschukmischung in zumindest einem Bauteil zum Erhalt des Fahrzeugreifens.

Das entsprechende Verfahren ist besonders vorteilhaft, weil mit diesem Fahrzeugreifen, insbesondere Fahrzeugluftreifen, erhalten werden können, die aufgrund der hohen Kompatibilität des eingesetzten Füllstoffs mit Kautschukmischungen und der vorteilhaften Teilchengrößenverteilung des Füllstoffes im Ausgangsmaterial, über ausgezeichnete Rolleigenschaften verfügen, obwohl sie zumindest teilweise aus recycelten Materialien hergestellt wurden und somit nachhaltiger sind als herkömmliche Fahrzeugreifen.

Offenbart wird eine Arbeitsvorrichtung, bevorzugt zum Einsatz in einem erfindungsgemäßen Verfahren, umfassend:
a1) einen Mahlbereich mit zumindest einer ersten Zugabeöffnung, zumindest einem Mahlwerkzeug zum Mahlen eines Feststoffs und zumindest einem ersten Förderwerkzeug zum Fördern eines Feststoffs durch den Mahlbereich, und
a2) einen mit dem Mahlbereich verbundenen Mischbereich mit zumindest einer zweiten Zugabeöffnung, zumindest einem Mischwerkzeug zum Mischen einer Dispersion, zumindest einer Auslassöffnung und zumindest einem zweiten Förderwerkzeug zum Fördern einer Dispersion zu der Auslassöffnung.

Die vorstehende Arbeitsvorrichtung ist vorteilhaft, weil sie für den Einsatz im erfindungsgemäßen Verfahren besonders geeignet ist.

Aus den vorstehend beschriebenen Gründen bevorzugt sind auch das Ausgangsmaterial für die Reifenherstellung, welches mit dem erfindungsgemäßen Verfahren herstellbar ist, sowie die entsprechende Kautschukmischung, die das Ausgangsmaterial umfasst, das durch Vulkanisation aus dieser Kautschukmischung herstellbare Vulkanisat und der Fahrzeugreifen, welcher eben jenes Vulkanisat umfasst.

Offenbart wird daher ein Ausgangsmaterial für die Reifenherstellung, umfassend Ruß und/oder Siliciumdioxid sowie Bindeöl in einer ölhaltigen Dispersion, hergestellt oder herstellbar mit einem erfindungsgemäßen Verfahren.

Offenbart wird somit eine Kautschukmischung umfassend das erfindungsgemäße Ausgangsmaterial und/oder hergestellt oder herstellbar mit einem erfindungsgemäßen Verfahren.

Offenbart wird zudem ein Vulkanisat, hergestellt oder herstellbar durch Vulkanisation einer erfindungsgemäßen Kautschukmischung.

Offenbart wird ebenfalls ein Fahrzeugreifen, bevorzugt Fahrzeugluftreifen, hergestellt oder herstellbar in einem erfindungsgemäßen Verfahren und/oder umfassend ein erfindungsgemäßes Vulkanisat.

Offenbart wird abschließend auch die Verwendung von Pyrolyse-Bindeöl, welches durch Pyrolyse gewonnen wurde, bei der Verarbeitung eines festen Pyrolyseprodukts umfassend Ruß und/oder Siliciumdioxid, welches durch Pyrolyse gewonnen wurde, zu einem Ausgangsmaterial für die Produktion von Fahrzeugreifen, zur Steigerung der Nachhaltigkeit in der Reifenproduktion, wobei das Pyrolyse-Bindeöl und das feste Pyrolyseprodukt bevorzugt im gleichen Pyrolyseprozess gewonnen wurden, wobei das Pyrolyse-Bindeöl besonders bevorzugt ein schweres Pyrolyse-Bindeöl mit einem Siedepunkt von mehr als 150°C, bevorzugt von mehr als 180 °C, besonders bevorzugt mehr als 210 °C, ist.

Nachfolgend werden bevorzugte Ausführungsformen der Erfindung unter Bezugnahme auf die beiliegende Zeichnung näher erläutert und beschrieben. Dabei zeigt:

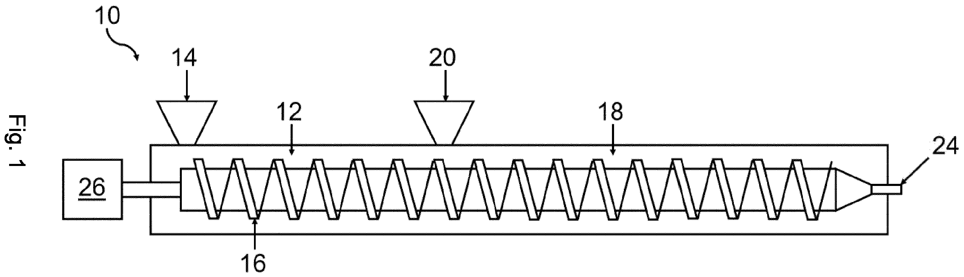

- Fig. 1: eine schematische Darstellung einer Arbeitsvorrichtung für die Durchführung des erfindungsgemäßen Verfahrens in einer bevorzugten Ausführungsform.

Fig. 1 zeigt eine schematische Darstellung einer Arbeitsvorrichtung 10 für die Durchführung des erfindungsgemäßen Verfahrens in einer bevorzugten Ausführungsform. Die Arbeitsvorrichtung 10 umfasst in der dargestellten Ausführungsform einen Mahlbereich 12 mit einer ersten Zugabeöffnung 14, die vorliegend mit einem Trichter versehen ist, um die Eingabe von festen Pyrolyseprodukten in den Mahlbereich zu erleichtern. Darüber hinaus umfasst die Arbeitsvorrichtung 10 ein mit dem Mahlbereich 12 verbundenen Mischbereich 18 mit einer zweiten Zugabeöffnung 20, die vorliegend ebenfalls als Trichter ausgeführt ist, jedoch alternativ beispielsweise auch über ein Rohrleitungssystem mit einem Reservoir für Bindeöl verbunden sein könnte.

Die Arbeitsvorrichtung 10 ist in der dargestellten bevorzugten Ausführungsform als Extruder ausgeführt, insbesondere als Extruder mit zwei Schneckenwellen. Die Schneckenwellen sind in der gezeigten Ausführungsform derart ausgeführt, dass im Bereich zwischen der ersten Zugabeöffnung 14 und der zweiten Zugabeöffnung 20, d. h. im Mahlbereich 12, vergleichsweise starke Scherraten von etwa 500 bis 2000 1/s wirken, wohingegen im Mischbereich 18, der zwischen der zweiten Zugabeöffnung 20 und der Auslassöffnung 24 angeordnet ist, die Schneckenwelle derart ausgeführt wird, dass niedrigere Scherraten von etwa 100 bis 500 1/s wirken und eine höhere Förderleistung erreicht wird. Die entlang der Länge der Arbeitsvorrichtung 10 unterschiedlich ausgeführte Schneckenwelle fungiert in der dargestellten Ausführungsform somit als Mahlwerkzeug 16 und Mischwerkzeug 22 sowie als Förderwerkzeug zum Fördern des Feststoffes bzw. der Dispersion durch die jeweiligen Bereiche. Das Werkzeug wird durch einen Motor 26 angetrieben, der vorliegend als Elektromotor ausgeführt ist.

In der dargestellten Ausführungsform der Arbeitsvorrichtung 10 sind der Mahlbereich 12 und der Mischbereich 18 unterschiedliche Zonen in dem Gehäuse der Arbeitsvorrichtung 10 und bilden zusammen die Arbeitskammer der Arbeitsvorrichtung 10, wobei das Förderwerkzeug, das Mahlwerkzeug 16 und das Mischwerkzeug 22 durch die Schneckenwelle gebildet werden. Die beispielhafte Arbeitsvorrichtung 10 umfasst eine Heizeinheit zum Temperieren des Mahlbereichs 12 und des Mischbereichs 18, wobei diese in Fig. 1 nicht gezeigt ist. Die Arbeitsvorrichtung 10 ist so ausgeführt, dass das Volumen des Mischbereichs 18 mehr als 75 % größer ist als das Volumen des Mahlbereichs 12.

Ein besonders bevorzugtes beispielhaftes Verfahren, welches nach Einschätzung der Erfinder zu besonders vorteilhaften Ausgangsmaterialien für die Herstellung von Fahrzeugreifen führt, kann wie folgt angegeben werden. In einem ersten Schritt wird durch Pyrolyse eines alten, recycelten Fahrzeugreifens zunächst ein festes Pyrolyseprodukt hergestellt, welches aus Ruß und Siliciumdioxid in einem Verhältnis von etwa 5:1 besteht, wobei als Nebenprodukt zudem ein Pyrolyse-Bindeöl erhalten wird. Aus dem Pyrolyse-Bindeöl werden die leichter flüchtigen Komponenten durch Destillation entfernt, sodass ein schweres Pyrolyse-Bindeöl erhalten wird, welches einen Siedepunkt von mehr als 210° C aufweist.

Das hergestellte feste Pyrolyseprodukt umfassend Ruß und Siliciumdioxid wird über die erste Zugabeöffnung 14 in den Mahlbereich 12 eingegeben und dort gemahlen. Die gemahlene Zusammensetzung wird kontinuierlich in den Mischbereich 18 gefördert und dort mit der Bindeöl-Zusammensetzung kontaktiert, die im Wesentlichen aus dem zuvor hergestellten schweren Pyrolyse-Bindeöl besteht. Durch das Vermischen dieser beiden Komponenten wird eine ölhaltige Dispersion erhalten, die zur Auslassöffnung 24 befördert und dort ausgeleitet wird. An der Auslassöffnung 24 ist ein Pelletierer angeordnet, der die ölhaltige Dispersion beim Ausleiten in Pellets umformt.

Die ausgeleitete ölhaltige Dispersion ist durch das Mischen weitgehend frei von Konzentrationsgradienten und wird beispielsweise direkt in ein Mischaggregat eingeleitet, in dem das hergestellte Ausgangsmaterial für die Reifenherstellung unmittelbar mit einem Kautschuk, beispielsweise SSBR, und optional weiteren Komponenten vermischt wird.

Das eingesetzte feste Pyrolyseprodukt kann beispielsweise eine kombinierte Schüttdichte von etwa 400 kg/m³ aufweisen, wobei das Siliciumdioxid beispielsweise amorphes Siliciumdioxid ist, welches zuvor als gefällte Kieselsäure in dem recycelten Altreifen eingesetzt wurde.

Das beispielhafte erfindungsgemäße Verfahren wird als kontinuierliches Verfahren betrieben. Das Mahlen in Schritt v1 wird dabei so betrieben, dass der Ruß und das Siliciumdioxid in der gemahlenen Zusammensetzung eine mittlere Teilchengröße D95 von etwa 15 µm aufweisen.

Mit diesem beispielhaften erfindungsgemäßen Verfahren kann ein Ausgangsmaterial für die Reifenherstellung erhalten werden, welches in vorteilhafterweise Ruß, Siliciumdioxid und Pyrolyse-Bindeöl umfasst und welches direkt in Kautschukmischungen eingesetzt werden kann, um daraus Vulkanisate und Fahrzeugreifen mit ausgezeichneten Eigenschaften zu erhalten.

### Bezugszeichenliste

- 10: Arbeitsvorrichtung
- 12: Mahlbereich
- 14: Erste Zugabeöffnung
- 16: Mahlwerkzeug
- 18: Mischbereich
- 20: Zweite Zugabeöffnung
- 22: Mischwerkzeug
- 24: Auslassöffnung
- 26: Motor

## Patentansprüche

1. Verfahren zur Herstellung von Ausgangsmaterialien für die Reifenherstellung mit einer Arbeitsvorrichtung (10) umfassend:
a1) einen Mahlbereich (12) mit zumindest einer ersten Zugabeöffnung (14), zumindest einem Mahlwerkzeug (16) zum Mahlen eines Feststoffs und zumindest einem ersten Förderwerkzeug zum Fördern eines Feststoffs durch den Mahlbereich (12), und
a2) einen mit dem Mahlbereich (12) verbundenen Mischbereich (18) mit zumindest einer zweiten Zugabeöffnung (20), zumindest einem Mischwerkzeug (22) zum Mischen einer Dispersion, zumindest einer Auslassöffnung (24) und zumindest einem zweiten Förderwerkzeug zum Fördern der Dispersion zu der Auslassöffnung (24),
wobei das Verfahren die folgenden Schritte umfasst:
v1) Eingeben eines festen Pyrolyseprodukts umfassend Ruß und/oder Siliciumdioxid in den Mahlbereich (12) über die erste Zugabeöffnung, Mahlen des festen Pyrolyseprodukts im Mahlbereich (12) zum Erhalt einer gemahlenen Zusammensetzung, und Fördern der gemahlenen Zusammensetzung aus dem Mahlbereich (12) in den Mischbereich,
v2) Eingeben einer Bindeöl-Zusammensetzung in den Mischbereich (18) über die zweite Zugabeöffnung (20) und Mischen der gemahlenen Zusammensetzung mit der Bindeöl-Zusammensetzung zum Erhalt einer ölhaltigen Dispersion, und
v3) Ausleiten der ölhaltigen Dispersion aus dem Mischbereich (18) durch die Auslassöffnung (24).

2. Verfahren nach Anspruch 1, wobei die Bindeöl-Zusammensetzung ein Pyrolyse-Bindeöl umfasst, welches durch Pyrolyse eines Kunststoffprodukts, bevorzugt eines Kautschukprodukts, besonders bevorzugt eines Fahrzeugreifens, gewonnen wurde, wobei das Pyrolyse-Bindeöl vorzugsweise ein Nebenprodukt der Herstellung des festen Pyrolyseprodukts ist.

3. Verfahren nach einem der Ansprüche 1 oder 2, wobei die Bindeöl-Zusammensetzung ein schweres Pyrolyse-Bindeöl mit einem Siedepunkt von mehr als 150 °C, bevorzugt von mehr als 180 °C, besonders bevorzugt mehr als 210 °C, umfasst, welches vorzugsweise durch Abtrennung der leichten Phase eines Pyrolyse-Bindeöls mittels Destillation erhalten wurde.

4. Verfahren nach einem der Ansprüche 1 bis 3, wobei das feste Pyrolyseprodukt Ruß umfasst, wobei das feste Pyrolyseprodukt bevorzugt Ruß und Siliciumdioxid umfasst.

5. Verfahren nach einem der Ansprüche 1 bis 4, wobei die ölhaltige Dispersion als Paste oder Pellets, bevorzugt als Pellets, ausgeleitet wird, wobei die Pellets bevorzugt durch einen an der Auslassöffnung (24) angeordneten Pelletierer ausgeformt werden.

6. Verfahren nach einem der Ansprüche 1 bis 5, wobei die kontinuierlich betreibbare Arbeitsvorrichtung (10) ein Extruder, bevorzugt ein Schneckenextruder mit einer, zwei oder mehreren Schneckenwellen, besonders bevorzugt ein Ringextruder oder ein Schneckenextruder mit zwei Schneckenwellen, ist.

7. Verfahren nach einem der Ansprüche 1 bis 6, wobei das Verfahren als kontinuierliches oder halbkontinuierliches Verfahren, bevorzugt als kontinuierliches Verfahren, betrieben wird.

8. Verfahren nach einem der Ansprüche 1 bis 7, wobei in Schritt v1) neben dem festen Pyrolyseprodukt auch Ruß in den Mahlbereich (12) gegeben wird, welcher nicht durch Pyrolyse erhalten wurde.

9. Verfahren zur Herstellung einer Kautschukmischung für die Herstellung von Fahrzeugreifen, umfassend die Schritte des Verfahrens zur Herstellung von Ausgangsmaterialien für die Reifenherstellung nach einem der Ansprüche 1 bis 8, sowie zusätzlich den Schritt:
v4) Einbringen der ölhaltigen Dispersion in ein Mischaggregat und Mischen der ölhaltigen Dispersion mit zumindest einem Kautschuk zum Erhalt einer füllstoffhaltigen Kautschukmischung,
wobei das Einbringen gemäß Schritt v4) bevorzugt derart unmittelbar nach Schritt v3) erfolgt, dass die ölhaltige Dispersion aus der Auslassöffnung (24) in das Mischaggregat gegeben wird.

10. Verfahren zur Herstellung eines Fahrzeugreifens, bevorzugt eines Fahrzeugluftreifens, umfassend die Schritte des Verfahrens zur Herstellung von Ausgangsmaterialien für die Reifenherstellung nach einem der Ansprüche 1 bis 8 oder die Schritte des Verfahrens zur Herstellung einer Kautschukmischung für die Herstellung von Fahrzeugreifen nach Anspruch 9, sowie zusätzlich den Schritt:
v5) Vulkanisieren eines Reifenrohlings umfassend die füllstoffhaltige Kautschukmischung in zumindest einem Bauteil zum Erhalt des Fahrzeugreifens.
